# EUROPEAN PATENT SPECIFICATION

(11) **EP 0 246 878 B1**
(45) Date of publication and mention of the grant of the patent: **17.03.1993**
(21) Application number: 87304487.9
(22) Date of filing: 20.05.1987
(51) Int. Cl.: H04N 9/64, H04N 9/78, H04N 5/213

(54) **Video signal processing circuits**
Videosignal-Verarbeitungsschaltungen
Circuits de traitement des signaux vidéo

(30) Priority: 20.05.1986 JP 115032/86
(43) Date of publication of application: 25.11.1987
(73) Proprietor: SONY CORPORATION, Tokyo 141 (JP)
(72) Inventor: Tanaka, Yutaka c/o Patents Division, Shinagawa-ku Tokyo 141 (JP); Matsunaga, Osamu c/o Patents Division, Shinagawa-ku Tokyo 141 (JP)
(74) Representative: Cotter, Ivan John

(56) References cited:
- EP-A- 0 169 052
- GB-A- 2 170 975
- US-A- 4 050 084
- US-A- 4 240 105
- US-A- 4 489 346

## Description

This invention relates to video signal processing circuits and to circuits for separating luminance and chrominance signals from video signals.

It has previously been proposed, in video signal separating systems, to use horizontal correlation, vertical correlation and time (frame) correlation of both a luminance signal Y and a carrier chrominance signal (chroma signal) C to separate the signals. In the foregoing respects, correlation means how the signals change along a line, from line to line, or from frame to frame, respectively. Previously proposed Y/C separating circuits utilising the above respective correlation techniques will be described with reference to Figures 8A to 10B of the accompanying drawings.

It has also been proposed in EP-A-169052 to provide a noise reduction circuit in which an input video signal is fed through series connected horizontal, vertical and frame correlation based noise reduction circuits.

Figure 8A illustrates a horizontal correlation Y/C separating circuit. A video signal applied to an input terminal 1 is supplied in common to a low pass filter 2Y and a bandpass filter 2C. A luminance signal Y_{H} is supplied to an output terminal 3Y from an output of the low pass filter 2Y, and a chroma signal C_{H} is supplied to an output terminal 3C from an output of the bandpass filter 2C.

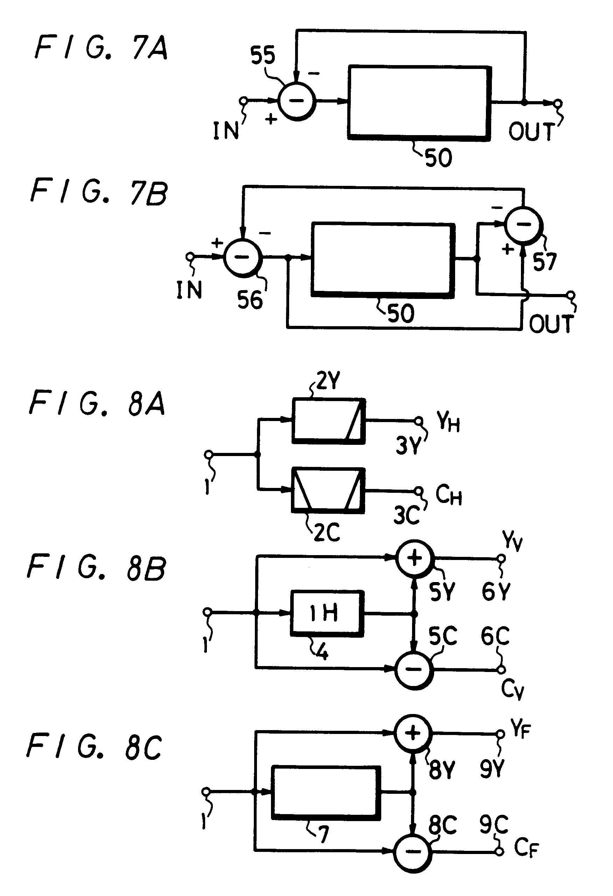

Figure 8B illustrates a vertical correlation Y/C separating circuit. A video signal applied to an input terminal 1 is supplied in common to a 1H delay line 4 (1H = one line period), an adder 5Y and a subtracter 5C. An output from the 1H delay line 4 is supplied in common to the adder 5Y and the subtracter 5C. As a result, a luminance signal Y_{V} from the adder 5Y is supplied to an output terminal 6Y and a chroma signal C_{V} from the subtracter 5C is supplied to an output terminal 6C.

Figure 8C illustrates a frame correlation Y/C separating circuit. A video signal applied to an input terminal 1 is supplied in common to an adder 8Y, a subtracter 8C and a frame memory 7 which constitutes a one frame delay line. An output of the frame memory 7 is supplied to the adder 8Y and the subtracter 8C. As a result, a luminance signal Y_{F} from the adder 8Y is supplied to an output terminal 9Y and a chroma signal C_{F} from the subtracter 8C is supplied to an output terminal 9C.

While the frame memory 7 is inherently designed to process a digitised signal, it is shown to process an analog signal for the sake of simplicity. Therefore, an A/D (analog-to-digital) converter at the input side thereof and a D/A (digital-to-analog) converter at the output side thereof are not shown but are understood to be included.

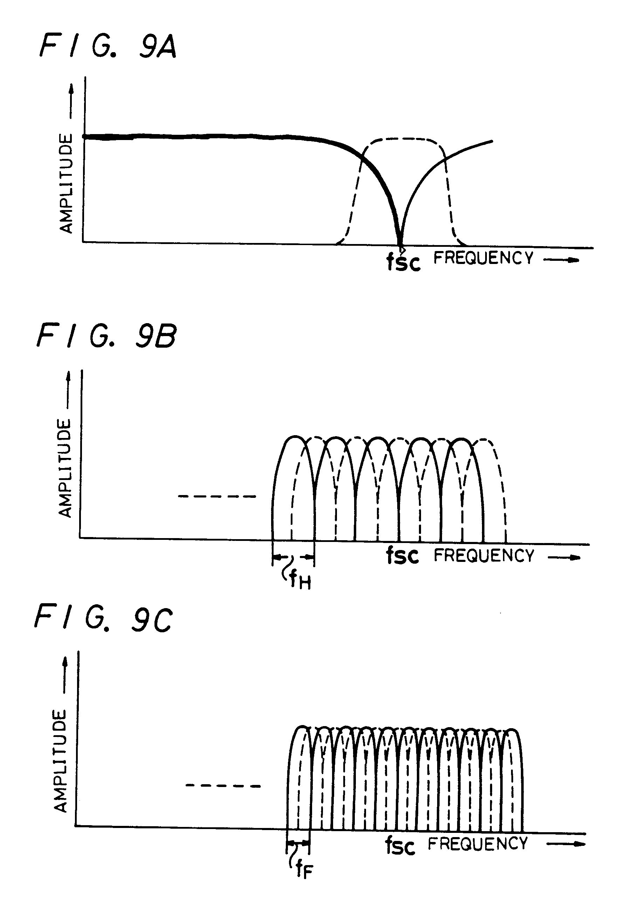

Figures 9A to 9C illustrate frequency vs. amplitude characteristics of the Y/C separating circuits shown in Figures 8A to 8C, respectively.

In Figure 9A, a bold solid curve represents the pass band characteristic of the low pass filter 2Y and a dashed curve represents the pass band characteristic of the bandpass filter 2C. In Figure 8A, the low pass filter 2Y can be replaced by a subcarrier trap. In this case, the pass band characteristic is indicated as both bold and fine solid curves in Figure 9A.

The vertical correlation Y/C separating circuit of Figure 8B comprises a known comb filter. The pass band characteristic of this comb filter relative to the luminance signal Y_{V} is made, as shown by a solid curve in Figure 9B, to have a maximum degree of attenuation at a subcarrier frequency fsc and at respective points spaced apart therefrom by distances which are integral multiples of the horizontal frequency f_{H}, and a minimum degree of attenuation at each of intermediate points between these points, that is at each of the points spaced apart from the subcarrier frequency fsc by a distance equal to an odd number times 1/2 of the horizontal frequency f_{H}, that is (2n + 1) f_{H}/2. On the other hand, the pass band characteristic thereof relative to the chroma signal C_{V} is made, as shown by a dashed curve in Figure 9B, to have a minimum degree of attenuation at the subcarrier frequency fsc and respective points spaced apart therefrom by distances which are integral multiples of the horizontal frequency f_{H}, and a maximum degree of attenuation at each of the points spaced apart from the subcarrier frequency fsc by a distance equal to an odd number times 1/2 of the horizontal frequency f_{H}, that is (2n + 1) f_{H}/2.

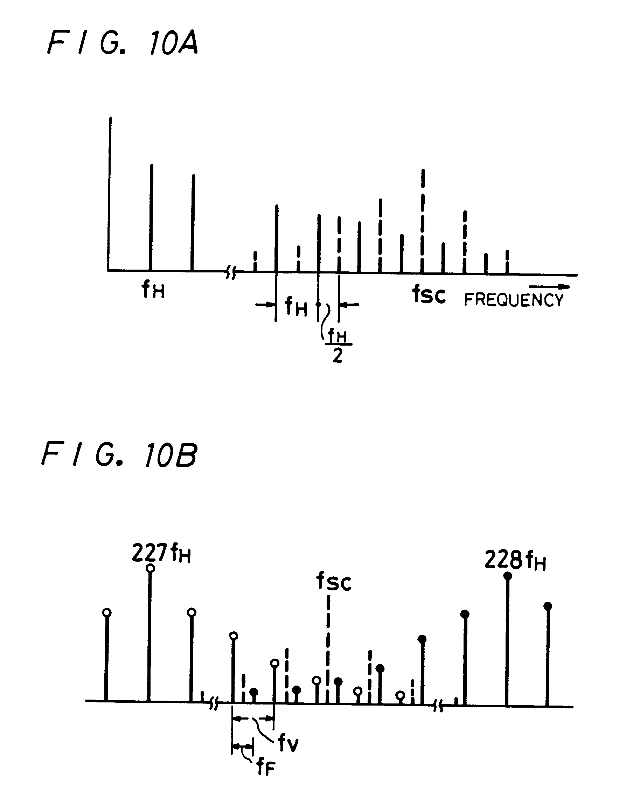

The reason for this is that, by virtue of the known technique of frequency interleaving, as shown by dashed lines in Figure 10A, the spectral components of the chroma signal C are located between the spectral components of the luminance signal Y as shown by solid lines in the same figure.

The frame correlation Y/C separating circuit of Figure 8C comprises, as mentioned above, a known comb filter. The pass band characteristic of this comb filter relative to the luminance signal Y_{F} is made, as shown by a solid curve in Figure 9C, to have a maximum degree of attenuation at the subcarrier frequency fsc and respective points spaced apart therefrom by distances which are integral multiples of the frame frequency f_{F} (= f_{V}/2), and a minimum degree of attenuation at each of the intermediate points between these points. that is at points spaced apart from the subcarrier frequency fsc by distances equal to an odd number times 1/2 of the frame frequency f_{F}, that is (2n + 1) f_{F}/2. On the other hand, the pass band characteristic thereof relative to the chroma signal C_{F} is made, as shown by a dashed line in Figure 9C, to have a minimum degree of attenuation at the subcarrier frequency fsc and respective points spaced apart therefrom by distances which are integral multiples of the frame frequency f_{F}, and a maximum degree of attenuation at respective points spaced apart from the subcarrier frequency fsc by distances equal to an odd number times 1/2 of the frame frequency f_{F}, that is (2n + 1) f_{F}/2.

The reason for this will be understood from the following. As shown in Figure 10B, which is a partially enlarged view of Figure 10B, by virtue of the know technique of frequency interleaving, a side band wave (shown by an open circle) of the vertical frequency f_{V} accompanied by an odd higher harmonic wave of the horizontal frequency f_{H} and a side band wave (shown by a solid circle) of the vertical frequency f_{V} accompanied by an even higher harmonic wave are spaced apart from each other by a distance equal to the frame frequency f_{F} = f_{V}/2. Then, the subcarrier frequency fsc and the side band wave of the vertical frequency f_{V} accompanied thereby are located between the frequency intervals of the frame frequency f_{F}.

The above described previously proposed Y/C separating apparatuses, individually utilising various correlations, cause the quality of the reproduced picture to deteriorate at places where no correlation exists.

When horizontal correlation is utilised, the deterioration of picture quality, such as the deterioration of a frequency characteristic and the occurrence of crosstalk, occurs on the picture at right hand and left hand side edges of longitudinal stripes as shown in Figure 11A of the accompanying drawings when the levels of the luminance signal Y and the chroma signal C change abruptly in the horizontal direction.

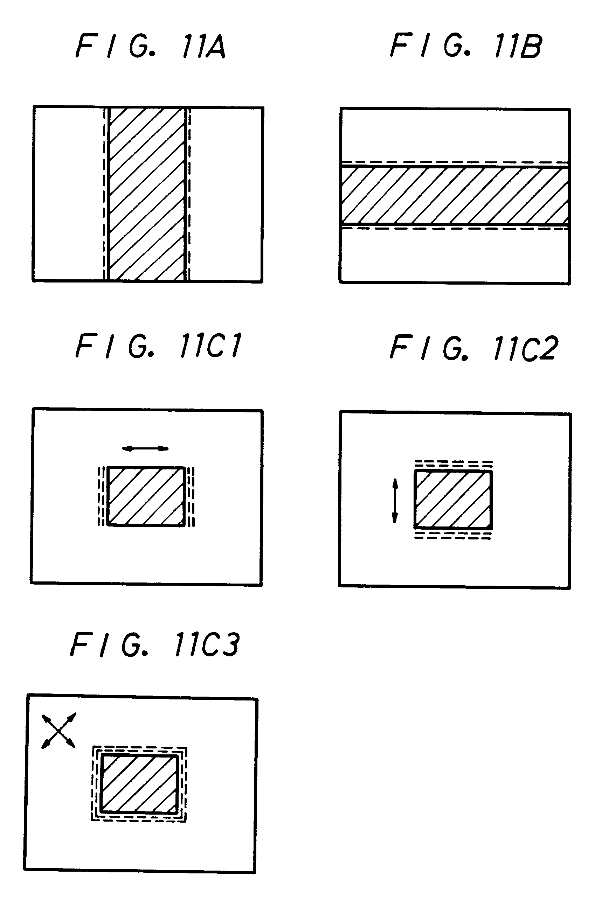

When vertical correlation is utilised, the deterioration of picture quality, such as the occurrence of crosstalk and the appearance of dots of the subcarrier, occurs on the picture at the top and bottom edges of horizontal stripes as shown in Figure 11B of the accompanying drawings when the levels of the luminance signal Y and the chroma signal C change abruptly in the vertical direction.

When frame correlation is utilised, as shown in Figure 11C1 to 11C3 of the accompanying drawings, crosstalk occurs in part or wholly in peripheral edges of the picture related to the direction in which a figure in the picture is moved in the directions shown by arrows. Also, the quality of the picture is considerably deteriorated, such as by way of multiple-line interference or the like, when the peripheral edge of the figure is doubled or tripled.

In order to solve such problems, consideration might be given to switching the separated outputs in response to the amount of movement of the picture element at a proper timing. In this case, the signal processing circuit or apparatus would need a moving picture element detecting section which would cause the apparatus to be large in size and complicated.

According to one aspect of the present invention there is provided a video signal processing circuit for separating luminance and chrominance component signals from a video signal, said video signal processing circuit comprising:
a first component signal separating means for separating the luminance and chrominance component signals from the video signal using horizontal correlation of the video signal;
a second component signal separating means for separating the luminance and chrominance component signals from the video signal using vertical correlation of the video signal;
a third component signal separating means for separating the luminance and chrominance component signals from the video signal using frame correlation of the video signal;
characterised by
intermediate value selecting means for selecting for output the luminance component signal having an intermediate value from among the three luminance component signals each separated using either horizontal, vertical or frame correlation of the video signal, and for selecting for output the chrominance component signal having an intermediate value from among the three chrominance component signals each separated using either horizontal, vertical or frame correlation of the video signal.

In this way, a changing video signal can be processed by correlation in a proper direction without detecting a moving image of the displayed picture, so that the quality of the reproduced picture can be improved.

Other aspects of the present invention are defined in claims 9 and 12.

Preferred embodiments of this invention described in detail hereinbelow provide a video signal luminance and chrominance signal separating apparatus which can improve the quality of a reproduced picture without requiring a moving picture element detecting section.

The invention will now be further described, by way of illustrative and non-limiting example, with reference to the accompanying drawings, in which:
Figure 1 is a block diagram of a video signal processing apparatus or circuit embodying the invention which is applied to Y/C separation;
Figures 2 and 3 are block diagrams shown alternative implementations of intermediate value selecting circuits of the embodiment shown in Figure 1;
Figure 4 is a block diagram of another embodiment of the present invention which is applied to Y/C separation;
Figure 5 is a block diagram of intermediate value selecting circuits of the embodiment shown in Figure 4;
Figure 6 and Figures 7A and 7B are block diagrams of respective further embodiments in which the present invention is applied to noise elimination;
Figures 8A to 8C are block diagrams of respective previously proposed Y/C separating circuits;
Figures 9A to 9C are graphs showing frequency vs. amplitude characteristics of the Y/C separating circuits shown in Figures 8A to 8C, respectively;
Figures 10A and 10B are spectral diagrams of a video signal; and
Figures 11A to 11C3 are respective conceptual diagrams showing pictures reproduced in the case of the previously proposed Y/C separating circuits.

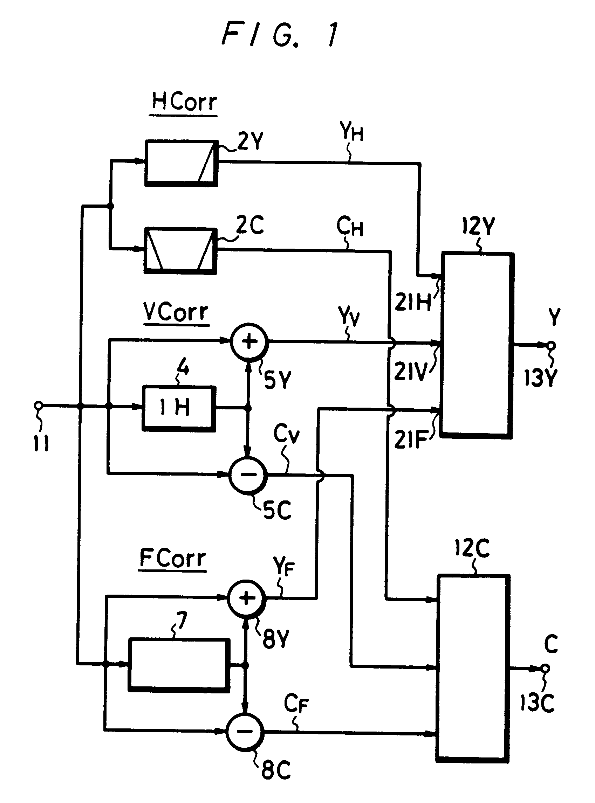

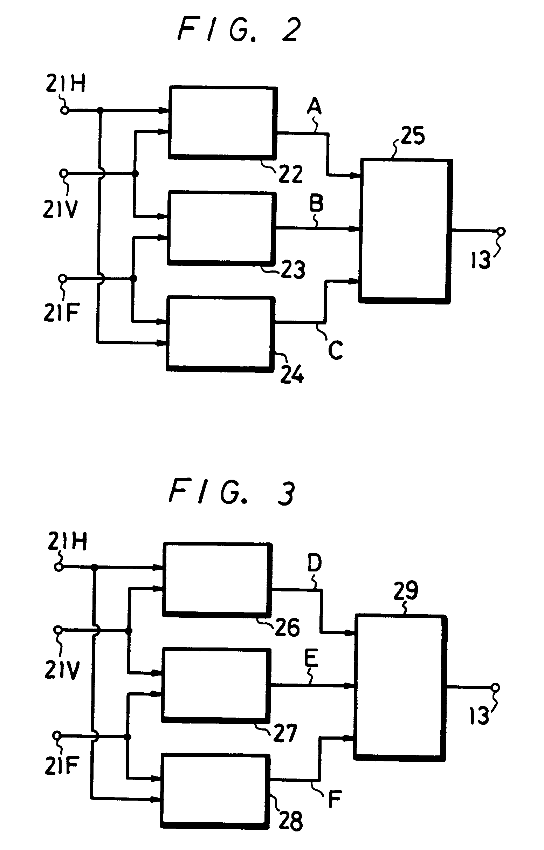

A signal processing apparatus embodying the present invention will now be described with reference to Figures 1 and 2, in which this embodiment is applied to the process of Y/C separation.

Figure 1 illustrates the circuit arrangement of this embodiment. In Figure 1, parts corresponding to like parts of Figure 8A to 8C are designated by the same references and are not further described.

The apparatus shown in Figure 1 comprises a horizontal correlation Y/C separating circuit H Corr, a vertical correlation Y/C separating circuit V Corr, and a frame correlation Y/C separating circuit F Corr, which are constructed as shown in Figures 8A, 8B and 8C, respectively. A video signal applied to an input terminal 11 is supplied in common to the Y/C separating circuits H Corr, V Corr and F Corr. Further, the apparatus shown in Figure 1 comprises intermediate value selecting circuits 12Y and 12C.

The intermediate value selecting circuit 12Y is supplied with output signals Y_{H}, Y_{V} and Y_{F} of the low pass filter 2Y, the adder 5Y and the adder 8Y, respectively. The intermediate value selecting circuit 12C is supplied with output signals C_{H}, C_{V} and C_{F} of the low pass filter 2C, the subtracter 5C and the subtracter 8C, respectively.

Figure 2 illustrates an example of a circuit arrangement that can be employed for each of the intermediate value selecting circuits 12Y and 12C. The appropriate output signals of the Y/C separating circuits H Corr, V Corr and F Corr of Figure 1 are received at input terminals 21H, 21V, and 21F, respectively. First, second and third maximum value selecting circuits 22, 23 and 24, respectively, are connected such that an input signal from the input terminal 21H is supplied to the third and first maximum value selecting circuits 24 and 22, an input signal from the input terminal 21V is supplied to the first and second maximum value selecting circuits 22 and 23, and an input signal from the input terminal 21F is supplied to the second and third maximum value selecting circuits 23 and 24. Outputs A, B, C of the first to third maximum value selecting circuits 22 to 24, respectively, are all supplied to a minimum value selecting circuit 25 and an output from the minimum value selecting circuit 25 is delivered to a terminal 13.

The operation of the intermediate value selecting circuit of Figure 2 will be now described for the case in which the circuit is the intermediate value selecting circuit 12Y.

Assume that the amplitudes or levels of the luminance signals Y_{H}, Y_{V} and Y_{F} supplied from the Y/C separating circuits H Corr, V Corr and F Corr of Figure 1 to the respective input terminals 21H, 21V and 21F of the intermediate value selecting circuit of Figure 2 satisfy the condition (amplitude or level relationship) that, for example, Y_{H} > Y_{V} > Y_{F}.

The luminance signals Y_{H} and Y_{V} are supplied to the first maximum value selecting circuit 22. Since the luminance signal Y_{H} has an amplitude larger than that of the luminance signal Y_{V}, the luminance signal Y_{H} appears at the output A of the circuit 22. The second maximum value selecting circuit 23 is supplied with the luminance signals Y_{V} and Y_{F}. Since the luminance signal Y_{V} has an amplitude larger than that of the luminance signal Y_{F}, the luminance signal Y_{V} appears at the output B of the circuit 23. Further, the third maximum value selecting circuit 24 is supplied with the luminance signals Y_{F} and Y_{H}. Since the luminance signal Y_{H} has an amplitude larger than that of the luminance signal Y_{F}, the luminance signal Y_{H} appears at the output C of the circuit 24.

The minimum value selecting circuit 25 is supplied with the outputs A, B and C, that is the luminance signals Y_{H}, Y_{V} and Y_{H} from the maximum value selecting circuits 22 to 24, and generates the luminance signal Y_{V} which has the smallest amplitude. Since the condition that Y_{H} > Y_{V} > Y_{F} is satisfied, the intermediate value Y_{V} is thus selected by the circuit arrangement of Figure 2.

Table 1 below shows the outputs produced by the intermediate value selecting circuit of Figure 2 in the case in which the condition (amplitude or level relationship) relating the three luminance signals Y_{H}, Y_{V} and Y_{F} is as set forth above and in other cases in which the condition is different from that set forth above. For all conditions, the intermediate value of the three luminance signals Y_{H}, Y_{V} and Y_{F} is selected by the intermediate value selecting circuit.

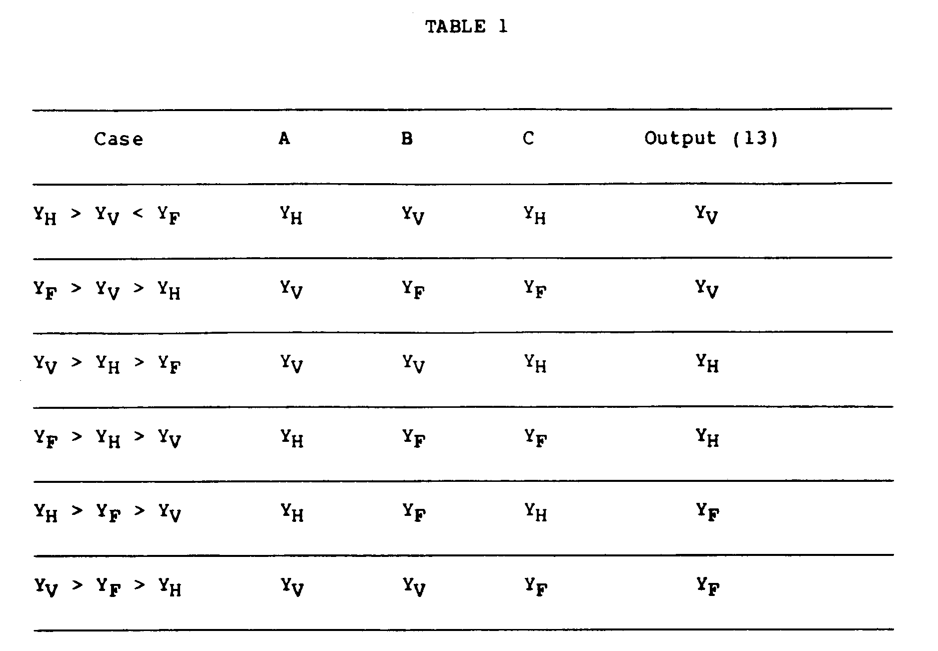

If the amplitudes or levels of two input signals applied to the maximum value selecting circuits 22 to 24 are equal to each other, either one of them may be selected. In this case, the intermediate value selecting circuit of Figure 2 never selects a third input signal and the relationships indicated in Table 1 are established.

The intermediate value selecting circuit 12C, which is also illustrated in Figure 2, is operated relative to the chroma signals C_{H}, C_{V} and C_{F} in the same way as described above for the circuit 12Y.

The operation of the embodiment shown in Figure 1 will now be described. The picture shown in Figure 11A has correlation in the vertical direction, that is the displayed image is relatively constant in the vertical direction. Conversely, the picture shown in Figure 11B has correlation in the horizontal direction. Further, correlations in the frame (time) directions appear in the still pictures shown in Figures 11C1 to 11C3, that is some part of the picture remains relatively constant from frame to frame.

When the picture has a correlation in any of the horizontal, vertical and time directions, there is a large probability that, of the outputs from the Y/C separating circuits H Corr, V Corr and F Corr of Figure 1, the output corresponding to the direction having correlation will become an intermediate value while the output corresponding to the direction having no correlation becomes either larger or smaller than the output corresponding to the correlation. For this reason, according to the embodiment of Figure 1, the intermediate value selecting circuit 12Y selects the luminance signal Y corresponding to the direction in which the picture has correlation. At the same time, the other intermediate value selecting circuit 12C selects the chroma signal C corresponding to the direction in which the picture has correlation. Thus, optimum Y/C separation for various pictures which are changing at any time is carried out, so that the quality of the reproduced picture is improved.

The intermediate value selecting circuits 12Y or 12C can alternatively be constructed, as shown in Figure 3, by replacing the maximum value selecting circuits 22, 23 and 24 of Figure 2 with minimum value selecting circuits 26, 27 and 28 and by replacing the minimum value selecting circuit 25 of Figure 2 with a maximum value selecting circuit 29. The circuits 26, 27 and 28 produce outputs D, E and F, respectively.

For different amplitude or level relationships of the three luminance signals Y_{H}, Y_{V} and Y_{F}, the intermediate value selecting circuit of Figure 3, for the case in which the circuit is the intermediate value relating circuit 12Y, operates in accordance with Table 2 below. For the case in which the intermediate value selecting circuit of Figure 3 is the intermediate value selecting circuit 12C, it is operated in the same way relative to the chroma signals C_{H}, C_{V} and C_{F}.

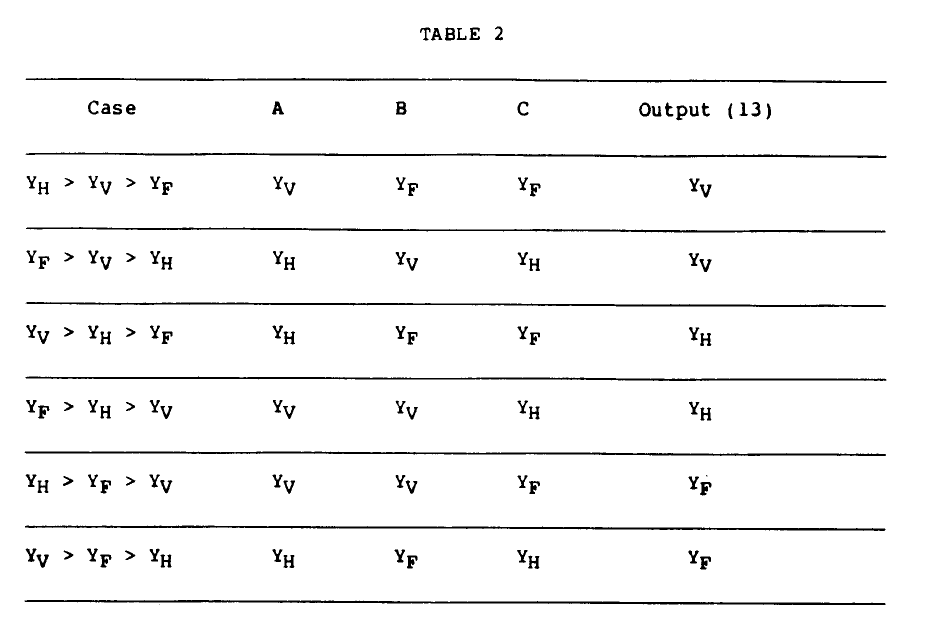

If the amplitudes or levels of two input signals applied to the minimum value selecting circuits 26 to 28 are equal to each other, the intermediate value selecting circuit of Figure 3 never selects a third input and the relationships indicated in Table 2 are established.

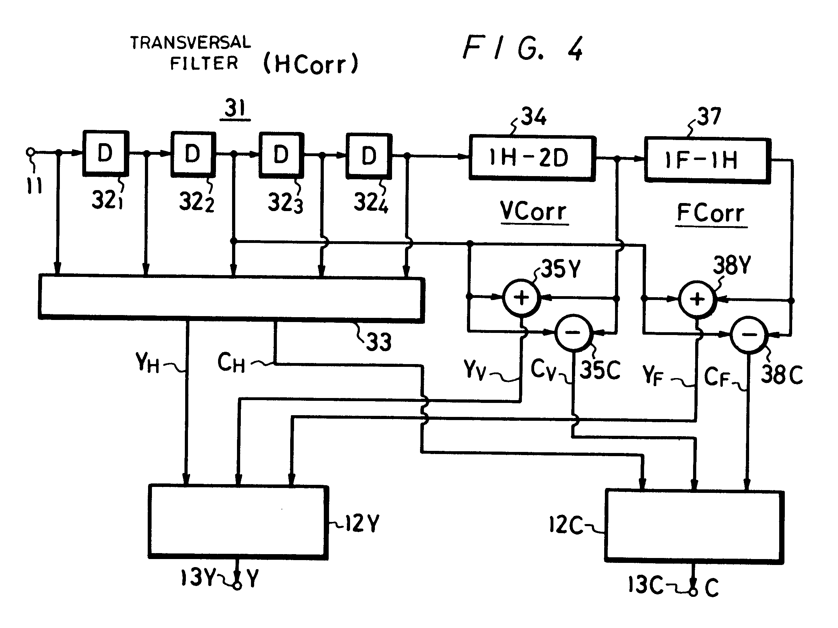

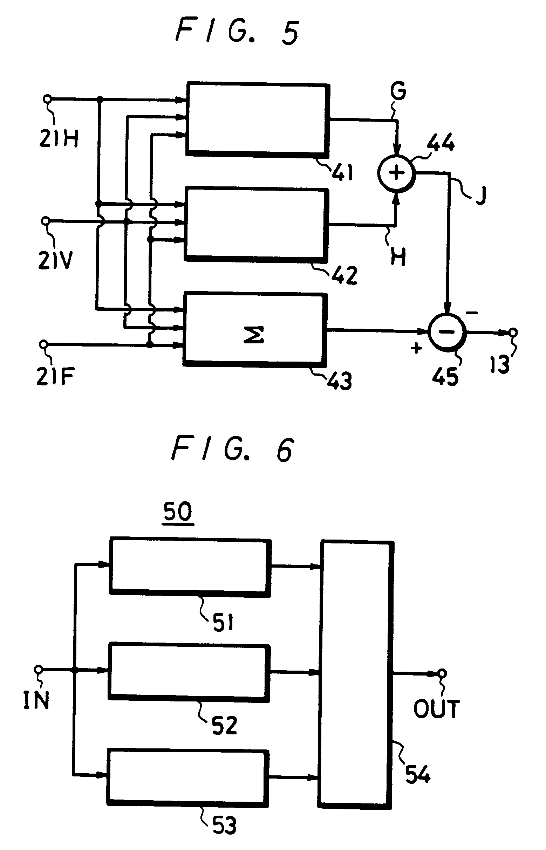

Another signal processing apparatus embodying the present invention will now be described with reference to Figures 4 and 5, in which this embodiment is applied to Y/C separation.

Figure 4 illustrates the circuit arrangement of this embodiment. In Figure 4, parts corresponding to like parts of Figure 1 are identified by the same references and are not further described.

The apparatus shown in Figure 4 comprises a transversal filter 31 including four unit delay lines 32₁, 32₂, 32₃ and 32₄ connected in series with one another and a weighting adding circuit 33. The input side of the first unit delay line 32₁, each of the junctions between adjacent ones of the first to fourth unit delay lines 32₁ to 32₄ and the output side of the fourth unit delay line 32₄ are connected to the weighting adding circuit 33. The transversal filter 31 is equivalent to the horizontal correlation Y/C separating circuit H Corr which is formed of the low pass filter 2Y and the bandpass filter 2C as shown in Figure 1, and is operated at a clock frequency of, for example, 4 fsc. Each of the unit delay lines 32₁ to 32₄ has a delay time D.

The output from the fourth unit delay line 32₄ of the transversal filter 31 is supplied to a first memory 34. An output from the first memory 34 is supplied in common to an adder 35Y and a subtracter 35C, and an output developed at the junction between the second and third unit delay lines 32₂ and 32₃ is supplied in common to the adder 35Y and the subtracter 35C. The delay time of the first memory 34 is selected to be 1H-2D. The memory 34 and the third and fourth unit delay lines 32₃ and 32₄ of the transversal filter 31 constitute a line memory whose delay time is selected to be 1H. The line memory, the adder 35Y and the subtracter 35C constitute a vertical correlation Y/C separating circuit V Corr.

The output from the first memory 34 is supplied to a second memory 37 and an output of the second memory 37 is supplied in common to a second adder 38Y and a second subtracter 38C. An output developed at the junction between the second and third unit delay lines 32₂ and 32₃ of the transversal filter 31 is supplied in common to the adder 38Y and the subtracter 38C. The second memory 37 has a delay time of 1F-1H, where 1F = one frame period. The second memory 37, the first memory 34 and the third and fourth unit delay lines 32₃ and 32₄ of the transversal filter 31 constitute a frame memory of which the delay time is selected to be 1F (one frame period). This frame memory, the second adder 38Y and the second subtracter 38C constitute a frame correlation Y/C separating circuit F Corr.

The intermediate value selecting circuit 12Y is supplied with the outputs Y_{H}, Y_{V} and Y_{F} of the transversal filter 31, the adder 35Y and the adder 38Y, respectively. The other intermediate value selecting circuit 12C is supplied with the outputs C_{H}, C_{V} and C_{F} of the transversal filter 31, the subtracter 35C and the subtracter 38C, respectively.

Figure 5 illustrates an example of a circuit arrangement that can be employed for each of the intermediate value selecting circuits 12Y and 12C according to this embodiment. Input signals applied to input terminals 21H, 21V and 21F are supplied in common to a maximum value selecting circuit 41, a minimum value selecting circuit 42 and an adder 43. Outputs G and H from the maximum value selecting circuit 41 and the minimum value selecting circuit 42, respectively, are supplied to a second adder 44. An output from the first adder 43 and an output J from the second adder 44 each are supplied to the subtracter 45 in which the output J is subtracted from the output of the adder 43.

In accordance with six amplitude or level relationships between the three luminance signals Y_{H}, Y_{V} and Y_{F}, for the case in which the intermediate value selecting circuit of Figure 5 is the intermediate value selecting circuit 12Y, the circuit is operated in accordance with Table 3 below. The intermediate value selecting circuit is operated in the same way relative to the chroma signals C_{H}, C_{V} and C_{F} for the case in which the circuit is the circuit 12C.

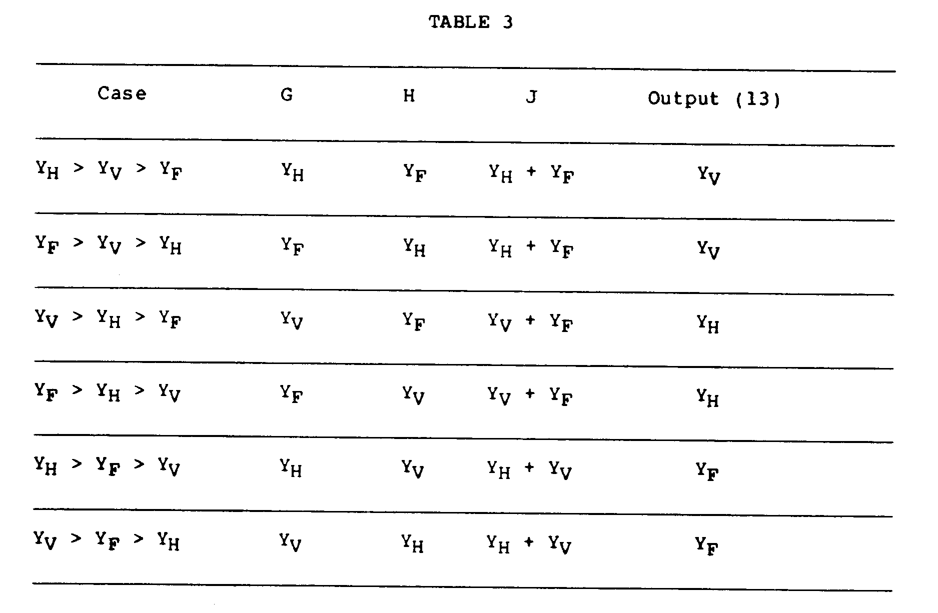

Even when two out of the three input signals are equal to each other in level, the relationships shown in Table 3 are established.

The intermediate value selecting circuit shown in Figure 5, together with the horizontal correlation and frame correlation Y/C separating circuits H Corr and F Corr of Figure 4, are formed of digital circuits. This is also true for the intermediate value selecting circuits which are constructed fundamentally as shown in Figures 2 and 3.

In this way, the embodiment of Figure 4 is operated in the same way as that of the embodiment of Figure 1, so that for a picture changing at any time, the luminance signal Y and the chroma signal C in the direction in which the picture has correlation are selected to thereby carry out optimum Y/C separation, thus improving the quality of the reproduced picture.

A further signal processing apparatus embodying the present invention will now be described with reference to Figure 6, in which this embodiment is applied to a noise eliminating circuit. A noise eliminating circuit 50 comprises horizontal, vertical and frame correlation detecting circuits 51, 52 and 53 and an intermediate value selecting circuit 54 which is supplied with outputs from the correlation detecting circuits 51 to 53. The correlation detecting circuits 51 to 53 correspond to the signal separating circuits described above and generate signals of the same kind as that of the aforementioned luminance signals Y_{H}, Y_{V} and Y_{F}. Further, the intermediate value selecting circuit 54 is constructed as shown in Figure 2, Figure 3 or Figure 5.

In the embodiment shown in Figure 1 or Figure 4, for one of the luminance signal Y and the chroma signal C, the other signal to be separated may be noise. Further, since the video signal has correlation and the noise has no correlation, it will easily be understood that the noise eliminating circuit of this embodiment is operated in the same way as that of the Y/C separating circuit shown in Figure 1 or Figure 4 to thereby separate the video signal and the noise. In other words, it will be easily understood that noise can be eliminated from the video signal.

As shown in Figure 7A, a noise eliminating apparatus of a recursive type may be made up of the noise eliminating circuit 50 of the embodiment shown in Figure 6 and a subtracter 55.

Further, as shown in Figure 7B, a first subtracter 56 may be connected to the input side of the noise eliminating circuit 50 and a second subtracter 57 may be connected to the output side of the circuit 50. The second subtracter 57 subtracts the output signal (which hardly contains any noise) of the noise eliminating circuit 50 from the input signal (which does contain the noise) to the noise eliminating circuit 50 to thereby separate the noise component from the video signal. Then, the separated noise component, which is obtained from the output of the subtracter 57, is subtracted by the subtracter 56 connected to the input side of the noise eliminating circuit 50 so as thereby to eliminate the noise contained in the input signal applied to the noise eliminating circuit 50. Thus, the signal-to-noise (S/N) ratio of the output signal can be improved even more.

The noise eliminating apparatus to which the present invention can be applied is not limited to the above-described embodiment: many modifications and variations could be effected by those skilled in the art.

According to the embodiments of the invention as set forth above in detail, video signal correlations in a plurality of ways, senses or directions are detected and the intermediate value of these detected correlation values is selected, so that, without the necesssity of detecting a moving picture element, the correlation of the optimum way, sense or direction can be utilised for the picture changing at any time. According, it is possible to obtain a signal separating apparatus which can improve the quality of the reproduced picture.

## Claims

1. A video signal processing circuit for separating luminance (Y) and chrominance (C) component signals from a video signal, said video signal processing circuit comprising:
a first component signal separating means (HCorr) for separating the luminance and chrominance component signals from the video signal using horizontal correlation of the video signal;
a second component signal separating means (VCorr) for separating the luminance and chrominance component signals from the video signal using vertical correlation of the video signal;
a third component signal separating means (FCorr) for separating the luminance and chrominance component signals from the video signal using frame correlation of the video signal;
characterised by
intermediate value selecting means (12Y, 12C) for selecting for output the luminance component signal having an intermediate value from among the three luminance component signals each separated using either horizontal, vertical or frame correlation of the video signal, and for selecting for output the chrominance component signal having an intermediate value from among the three chrominance component signals each separated using either horizontal, vertical or frame correlation of the video signal.

2. A video signal processing circuit according to claim 1, wherein the first component signal separating means includes a low pass filter (2Y) for separating a luminance signal (Y_{H}) and a bandpass filter (2C) for separating a chrominance signal (C_{H}).

3. A video signal processing circuit according to claim 1 or claim 2, wherein the second component signal separating means includes a delay circuit (4; 32₃, 32₄, 34) having a delay period of one horizontal line period, an adder (5Y; 35Y) and a subtracter (5C; 35C), the arrangement being such that the video signal is supplied in common to the adder, the subtracter, and the delay circuit and the output of the delay circuit is supplied in common to the adder and the subtracter whereby a luminance signal (Y_{V}) is derived at an output of the adder (5Y; 35Y) and a chrominance signal (C_{V}) is derived at an output of the subtracter (5C; 35C).

4. A video signal processing circuit according to claim 1, claim 2 or claim 3, wherein the third component signal separating means includes a frame memory (7; 37, 34, 32₃, 32₄), an adder (8Y; 38Y) and a subtracter (8C; 38C), the arrangement being such that the video signal is supplied in common to the adder, the subtracter, and the frame memory and the output of the frame memory is supplied in common to the adder and the subtracter, whereby a luminance signal (Y_{F}) is derived at an output of the adder (8C; 38C) and a chrominance signal (C_{F}) is derived at an output of the subtracter (8C; 38C).

5. A video signal processing circuit according to any one of claims 1 to 4, wherein each intermediate value selecting means (12Y, 12C) comprises three maximum value selecting circuits (22, 23, 24) and a minimum value circuit (25), the arrangement being such that the signal represented by each component signal separating means is inputted to two of the maximum value selecting circuits so that each maximum value selecting circuit has two inputs, and outputs of the maximum value selecting circuits (22, 23, 24) are inputted to the minimum value circuit (25) whereby an output of the minimum value circuit is an intermediate one of the separated luminance or chrominance signals, respectively.

6. A video signal processing circuit according to any of claims 1 to 4, wherein each intermediate value selecting means (12Y, 12C) comprises three minimum value selecting circuits (26, 27, 28) and a maximum value circuit (29), the arrangement being such that the signal separated by each component signal separating means is inputted to two of the minimum value selecting circuits so that each minimum value selecting circuit has two inputs, and outputs of the minimum value selecting circuits (22, 23, 24) are inputted to the maximum value circuit (29) whereby an output of the maximum value circuit is an intermediate one of the separated luminance of chrominance signals, respectively.

7. A video signal processing circuit according to any one of claims 1 to 4, wherein each intermediate value selecting means comprises a maximum value circuit (41), a minimum value circuit (42), a first adder (43), a second adder (44) and a subtracter (45), the arrangement being such that the signals separated by the component signal separating means (H Corr, V Corr, F Corr) are inputted in common to the maximum value circuit (41), the minimum value circuit (42), and the first adder (43), an output (G) of the maximum value circuit (41) and an output (H) of the minimum value circuit (42) are added together by the second adder (44), and an output (J) of the second adder (44) is subtracted by the subtracter (45) from an output of the first adder (43) to produce an output which is a separated luminance or chrominance signal having an intermediate value.

8. A video signal processing circuit according to claim 1, wherein the first component signal separating means includes a transversal filter (31).

9. A video signal processing circuit for separating noise and luminance (Y) component signals from a video signal, said video signal processing circuit comprising:
a first component signal separating means (51) for separating the noise and luminance component signals from the video signal using horizontal correlation of the video signal;
a second component signal separating means (52) for separating the noise and luminance component signals from the video signal using vertical correlation of the video signal;
a third component signal separating means (53) for separating the noise and luminance component signals from the video signal using frame correlation of the video signal;
characterised by
intermediate selecting means (54) for selecting for output the luminance component signal having an intermediate value from among the three luminance component signals each separated using either horizontal, vertical or frame correlation of the video signal.

10. A video signal processing circuit according to claim 9, comprising noise signal elimination means including a subtracter (55) arranged to be supplied with the output of the intermediate value selecting means (54) and an input video signal containing a noise component in addition to the luminance signal, the subtracter (55) being operative to supply the difference of the two inputs thereto as inputs to the plurality of component signal separating means (51, 52, 53).

11. A video signal processing circuit according to claim 9, comprising a noise signal elimination means including a first subtracter (57) and a second subtracter (56), wherein the first subtracter (57) is arranged to be supplied with the output of the intermediate value selecting means (54), the second subtracter (56) is arranged to be supplied with an output of the first subtracter (57) and an input video signal containing a noise component in addition to the luminance signal, and the second subtracter (56) is connected to supply an output thereof as inputs to the plurality of component signal separating means (51, 52, 53) and as an input to the first subtracter (57), whereby a substantially noise free output is produced by the intermediate value selecting means (54).

12. A video signal processing circuit for separating noise and chrominance (C) component signals from a video signal, said video signal processing circuit comprising:
a first component signal separating means (51) for separating the noise and chrominance component signals from the video signal using horizontal correlation of the video signal;
a second component signal separating means (52) for separating the noise and chrominance component signals from the video signal using vertical correlation of the video signal;
a third component signal separating means (53) for separating the noise and chrominance component signals from the video signal using frame correlation of the video signal;
characterised by
intermediate value selecting means (54) for selecting for output the chrominance component signal having an intermediate value from among the three luminance component signals each separated using either horizontal, vertical or frame correlation of the video signal.

## Patentansprüche

1. Videosignal-Verarbeitungsschaltung zum Abtrennen Von Luminanz- und Chrominanz-Komponentensignalen (Y bzw. C) aus einem Videosignal mit
einer ersten Komponentensignil-Abtrenneinrichtung (HCorr) zum Abtrennen der Luminanz- und Chrominanz-Komponentensignale aus dem Videosignal unter Verwendung der horizontalen Korrelation des Videosignals,
einer zweiten Komponentensignal-Abtrenneinrichtung (VCorr) zum Abtrennen der Luminanz- und Chrominanz-Komponentensignale aus dem Videosignal unter Verwendung der vertikalen Korrelation des Videosignals und
einer dritten Komponentensignal-Abtrenneinrichtung (FCorr) zum Abtrennen der Luminanz- und Chrominanz-Komponentensignale aus dem Videosignal unter Verwendung der Rahmen-(Vollbild)-Korrelation des Videosignals,
**gekennzeichnet durch**
eine Zwischenwert-Auswahleinrichtung (12Y, 12C)
zum Auswählen desjenigen Luminanz-Komponentensignals für die Ausgabe, das unter den drei jeweils unter Verwendung entweder der horizontalen oder der vertikalen oder der Vollbild-Korrelation des Videosignals abgetrennten Luminanz-Komponentensignalen einen Zwischenwert besitzt, und
zum Auswählen desjenigen Chrominanz-Komponentensignals für die Ausgabe, das unter den drei unter Verwendung entweder der horizontalen oder der vertikalen oder der Vollbild-Korrelation des Videosignals abgetrennten Chrominanz-Komponentensignalen einen Zwischenwert besitzt.

2. Videosignal-Verarbeitungsschaltung nach Anspruch 1, bei der die erste Komponentensignal-Abtrenneinrichtung ein Tiefpaßfilter (2Y) zum Abtrennen eines Luminanzsignals (Y_{H}) und ein Bandpaßfilter (2C) zum Abtrennen eines Chrominanzsignals (C_{H}) aufweist.

3. Videosignal-Verarbeitungsschaltung nach Anspruch 1 oder 2, bei der die zweite Komponentensignal-Abtrenneinrichtung eine Verzögerungsschaltung (4; 32₃, 32₄, 34) mit einer einer horizontalen Zeilenperiode entsprechenden Verzögerungszeit, einen Addierer (5Y; 35Y) und einen Subtrahierer (5C; 35C) aufweist, wobei die Anordnung derart getroffen ist, daß das Videosignal dem Addierer, dem Subtrahierer und der Verzögerungsschaltung gemeinsam zugeführt wird und das Ausgangssignal der Verzögerungsschaltung dem Addierer und dem Subtrahierer gemeinsam zugeführt wird, so daß an dem Ausgang des Addierers (5Y; 35Y) ein Luminanzsignal (Y_{V}) und an dcm Ausgang des Subtrahierers (5C; 35C) ein Chrominanzsignal (C_{V}) auftritt.

4. Videosignal-Verarbeitungsschaltung nach Anspruch 1, 2 oder 3, bei der die dritte Komponentensignil-Abtrenneinrichtung einen Vollbildspeicher (7; 37, 34, 32₃, 32₄), einen Addierer (8Y; 38Y) und einen Subtrahierer (8C; 38C) aufweist, wobei die Anordnung derart getroffen ist, daß das Videosignal dem Addierer, dem Subtrahierer und dem Vollbildspeicher gemeinsam zugeführt und das Ausgangssignal des Vollbildspeichers dem Addierer und dem Subtrahierer gemeinsam zugeführt wird, so daß an dem Ausgang des Addierers (8Y; 38Y) ein Luminanzsignal (Y_{F}) und an dem Ausgang des Subtrahierers (8C; 38C) ein Chrominanzsignal (C_{F}) auftritt.

5. Videosignal-Verarbeitungsschaltung nach einem der Ansprüche 1 bis 4, bei der jede Zwischenwert-Auswahleinrichtung (12Y, 12C) drei Maximalwert-Auswahlschaltungen (22,23, 24) und eine Minimalwertschaltung (25) umfaßt, wobei die Anordnung derart getroffen ist, daß das von jeder der Komponentensignal-Abtrenneinrichtungen abgetrennte Signal zwei der genannten Maximalwert-Auswahlschaltungen als Eingangssignal zugeführt wird, so daß jede Maximalwert-Auswahlschaltung zwei Eingangssignale aufnimmt, und daß die Ausgangssignale der Maximalwert-Auswahlschaltungen (22, 23, 24) der Minimalwertschaltung (25) als Eingangssignal zugeführt werden, so daß das Ausgangssignal der Minimalwertschaltung einen Zwischenwert der abgetrennten Luminanz- bzw. Chrominanzsignale darstellt.

6. Videosignal-Verarbeitungsschaltung nach einem der Ansprüche 1 bis 4, bei bei der jede Zwischenwert-Auswahleinrichtung (12Y, 12C) drei Minimalwert-Auswahlschaltungen (26, 27,28) und eine Maximalwertschaltung (29) umfaßt, wobei die Anordnung derart getroffen ist daß das von jeder der Komponentensignal-Abtrenneinrichtungen abgetrennte Signal zwei der genannten Minimalwert-Auswahlschaltungen als Eingangssignal zugeführt wird, so daß jede Minimalwert-Auswahlschaltung zwei Eingangssignale aufnimmt, und daß die Ausgangssignale der Minimalwert-Auswahlschaltungen (26, 27, 28) der Maximalwertschaltung (29) als Eingangssignal zugeführt werden, so daß das Ausgangssignal der Maximalwertschaltung einen Zwischenwert der abgetrennten Luminanz- bzw. Chrominanzsignale darstellt.

7. Videosignal-Verarbeitungsschaltung nach einem der Ansprüche 1 bis 4, bei der jede Zwischenwert-Auswahleinrichtung (12Y, 12C) eine Maximalwertschaltung (41), eine Minimalwertschaltung (42), einen ersten Addierer (43), einen zweiten Addierer (44) und einen Subtrahierer (45) umfaßt, wobei die Anordnung derart getroffen ist, daß die von der Komponentensignal-Abtrenneinrichtungen (HCorr, VCorr, FCorr) abgetrennten Signale der Maximalwertschaltung (41), der Minimalwertschaltung (42) und dem ersten Addierer (43) gemeinsam zugeführt werden, das Ausgangssignal (G) der Maximalwertschaltung (41) und das Ausgangssignal (H) der Minimalwertschaltung (42) in dem zweiten Addierer (44) addiert werden und das Ausgangssignal (J) des zweiten Addierers (44) mit Hilfe des Subtrahierers (45) von dem Ausgangssignal des ersten Addierers (43) subtrahiert wird, um ein Ausgangssignal zu erzeugen, das ein abgetrenntes Luminanz- oder Chrominanzsignal mit einem Zwischenwert darstellt.

8. Videosignal-Verarheitungsschaltung nach Anspruch 1 bei der die erste Komponentensignal-Abtrenneinrichtung ein Transversalfilter (31) aufweist.

9. Videosignal-Verarbeitungsschaltung zum Abtrennen von Geräusch- und Luminanz-Komponentensignalen (Y) aus einem Videosignal mit
einer ersten Komponentensignal-Abtrenneinrichtung (51) zum Abtrennen der Geräusch- und Luminanz-Komponentensignale aus dem Videosignal unter Verwendung der horizontalen Korrelation des Videosignals,
einer zweiten Komponentensignal-Abtrenneinrichtung (52) zum Abtrennen der Geräusch- und Luminanz-Komponentensignale aus dem Videosignal unter Verwendung der vertikalen Korrelation des Videosignals und
einer dritten Komponentensignal-Abtrenneinrichtung (53) zum Abtrennen der Geräusch- und Luminanz-Komponentensignale aus dem Videosignal unter Verwendung der Rahmen(Vollbild)-Korrelation des Videosignals,
**gekennzeichnet durch**
eine Zwischenwert-Auswahleinrichtung (54) zum Auswählen desjenigen Luminanz-Komponentensignals für die Ausgabe, das unter den drei jeweils unter Verwendung entweder der horizontalen oder der vertikalen oder der Vollbild-Korrelation des Videosignals abgetrennten Luminanz-Komponentensignalen einen Zwischenwert besitzt.

10. Videosignal-Verarheitungsschaltung nach Anspruch 9 mit einer Geräuschsignal-Unter drückungseinrichtung, die einen Subtrahierer (55) aufweist, der so angeordnet ist, daß ihm das Ausgangssignal der Zwischenwert-Abtrenneinrichtung (54) und ein Eingangs-Videosignal zugeführt werden, das zusätzlich zu dem Luminanzsignal eine Geräusehkomponente enthält, wobei der Subtrahierer (55) die Differenz seiner beiden Eingangssignale der Mehrzahl von Komponentensignal-Abtrenneinrichtungen (51, 52, 53) als Eingangssignale zuführt.

11. Videosignal-Verarbeitungsschaltung nach Anspruch 9 mit einer Geräuschsignal-Unter drückungseinrichtung, die einen ersten Subtrahierer (57) und einen zweiten Subtrahierer (56) aufweist, wobei der erste Subtrahierer (57) so angeordnet ist, daß ihm das Ausgangssignal der Zwischenwert-Abtrenneinrichtung (54) zugeführt wird, wobei der zweite Subtrahierer (56) so angeordnet ist, daß ihm das Ausgangssignal ersten Subtrahierers (57) und ein Videosignal zugeführt werden, das zusätzlich zu dem Luminanzsignal eine Geräuschkomponente enthält, und wobei der zweite Subtrahierer (56) so geschaltet ist, daß sein Ausgangssignal als Eingangssignale der Mehrzahl von Komponentensignal-Abtrenneinrichtungen (51, 52, 53) und als Eingangssignal dem ersten Subtrahierers (57) zugeführt wird, so daß die Zwischenwert-Abtrenneinrichtung (54) ein im wesentlichen geräuschfreies Ausgangssignal erzeugt

12. Videosignal-Verarbeitungsschaltung zum Abtrennen von Geräusch- und Chrominanz-Komponentensignalen (C) aus einem Videosignal mit
einer ersten Komponentensignal-Abtrenneinrichtung (51) zum Abtrennen der Geräusch- und Chrominanz-Komponentensignale aus dem Videosignal unter Verwendung der horizontalen Korrelation des Videosignals,
einer zweiten Komponentensignal-Abtrenneirrichtung (52) zum Abtrennen der Geräusch- und Chrominanz-Komponentensignale aus dem Videosignal unter Verwendung der vertikalen Korrelation des Videosignals und
einer dritten Komponentensignal-Abtrenneinrichtung (53) zum Abtrennen der Geräusch- und Chrominanz-Komponentensignale aus dem Videosignal unter Verwendung der Rahmen-(Vollbild)-Korrelation des Videosignals,
**gekennzeichnet durch**
eine Zwischenwert-Auswahleinrichtung (54) zum Auswählen desjenigen Chrominanz-Komponentensignals für die Ausgabe, das unter den drei jeweils unter Verwendung entweder der horizontalen oder der vertikalen oder der Vollbild-Korrelation des Videosignals abgetrennten Luminanz-Komponentensignalen einen Zwischenwert besitzt.

## Revendications

1. Circuit de traitement de signal vidéo pour séparer des signaux de composantes de luminance (Y) et de chrominance (C) d'un signal vidéo, ledit circuit de traitement de signal vidéo comprenant :
un premier moyen de séparation de signal de composante (HCorr) pour séparer les signaux de composantes de luminance et de chrominance du signal vidéo en utilisant une corrélation horizontale du signal vidéo :
un second moyen de séparation de signal de composante (VCorr) pour séparer les signaux de composantes de luminance et de chrominance du signal vidéo en utilisant une corrélation verticale du signal vidéo :
un troisième moyen de séparation de signal de composante (FCorr) pour séparer les signaux de composantes de luminance et de chrominance du signal vidéo en utilisant une corrélation d'image du signal vidéo :
caractérisé par :
un moyen de sélection de valeur intermédiaire (12Y, 12C) pour sélectionner en vue d'une émission en sortie le signal de composante de luminance présentant une valeur intermédiaire pris parmi les trois signaux de composante de luminance qui sont chacun séparés en utilisant soit une corrélation horizontale, soit une corrélation verticale, soit une corrélation d'image du signal vidéo et pour sélectionner en vue d'une émission en sortie le signal de composante de chrominance présentant une valeur intermédiaire pris parmi les trois signaux de composante de chrominance qui sont chacun séparés en utilisant soit une corrélation horizontale, soit une corrélation verticale, soit une corrélation d'image du signal vidéo.

2. Circuit de traitement de signal vidéo suivant la revendication 1, dans lequel le premier moyen de séparation de signal de composante inclut un filtre passe-bas (2Y) pour séparer un signal de luminance (Y_{H}) et un filtre passe-bande (2C) pour séparer un signal de chrominance (C_{H}).

3. Circuit de traitement de signal vidéo selon la revendication 1 ou 2, dans lequel le second moyen de séparation de signal de composante inclut un circuit de retard (4 ; 32₃, 32₄, 34) présentant une période de retard d'une période de ligne horizontale, un additionneur (5Y ; 35Y) et un soustracteur (5C ; 35C),
l'agencement étant tel que le signal vidéo est appliqué en commun à l'additionneur, au soustracteur et au circuit de retard et que la sortie du circuit de retard est appliquée en commun à l'additionneur et au soustracteur d'où il résulte qu'un signal de luminance (X_{V}) est dérivé d'une sortie de l'additionneur (5Y : 35Y) et qu'une signal de chrominance (C_{V}) est dérivé d'une sortie du soustracteur (5C ; 35C).

4. Circuit de traitement de signal vidéo selon la revendication 1, 2 ou 3, dans lequel le troisième moyen de séparation de signal de composante inclut une mémoire d'image (7 ; 37, 34, 32₃, 32₄), un additionneur (8Y ; 38Y) et un soustracteur (8C ; 38C), l'agencement étant tel que le signal vidéo est appliqué en commun à l'additionneur, au soustracteur et à la mémoire d'image et que la sortie de la mémoire d'image est appliquée en commun à l'additionneur et au soustracteur d'où il résulte qu'un signal de luminance (Y_{F}) est dérivé au niveau d'une sortie de l'additionneur (8C ; 38C) et qu'un signal de chrominance (C_{F}) est dérivé au niveau d'une sortie du soustracteur (8C ; 38C).

5. Circuit de traitement de signal vidéo selon l'une quelconque des revendications 1 à 4, dans lequel chaque moyen de sélection de valeur intermédiaire (12Y, 12C) comprend trois circuits de sélection de valeur maximale (22, 23, 24) et un circuit de valeur minimale (25), l'agencement étant tel que le signal représenté par chaque moyen de séparation de signal de composante est entré sur deux des circuits de sélection de valeur maximale de telle sorte que chaque circuit de sélection de valeur maximale présente deux entrées, et que des sorties des circuits de sélection de valeur maximale (22, 23, 24) soient entrées sur le circuit de valeur minimale (25) d'où il résulte qu'une sortie du circuit de valeur minimale est une valeur intermédiaire respective des signaux de luminance ou de chrominance séparés.

6. Circuit de traitement de signal vidéo selon l'une quelconque des revendications 1 à 4, dans lequel chaque moyen de sélection de valeur intermédiaire (12Y, 12C) comprend trois circuits de sélection de valeur minimale (26, 27, 28) et un circuit de valeur maximale (29), l'agencement étant tel que le signal séparé par chaque moyen de séparation de signal de composante soit entré sur deux des circuits de sélection de valeur minimale de telle sorte que chaque circuit de sélection de valeur minimale présente deux entrées, et que des sorties des circuits de sélection de valeur minimale (22, 23, 24) soient entrées sur le circuit de valeur maximale (29) d'où il résulte qu'une sortie du circuit de valeur maximale est une valeur intermédiaire respective des signaux de luminance ou de chrominance séparés.

7. Circuit de traitement de signal vidéo selon l'une quelconque des revendications 1 à 4, dans lequel chaque moyen de sélection de valeur intermédiaire comprend un circuit de valeur maximale (41), un circuit de valeur minimale (42), un premier additionneur (43), un second additionneur (44) et un soustracteur (45), l'agencement étant tel que les signaux séparés par les moyens de séparation de signal de composante (HCorr, VCorr, FCorr) soient entrés en commun sur le circuit de valeur maximale (41), sur le circuit de valeur minimale (42) et sur le premier additionneur (43), qu'une sortie (G) du circuit de valeur maximale (41) et qu'une sortie (H) du circuit de valeur minimale (42) soient ajoutées ensemble par le second additionneur (44), et qu'une sortie (J) du second additionneur (44) soit soustraite par le soustracteur (45) d'une sortie du premier additionneur (43) pour produire une sortie qui est un signal de luminance ou de chrominance séparé qui présente une valeur intermédiaire.

8. Circuit de traitement de signal vidéo suivant la revendication 1, dans lequel le premier moyen de séparation de signal de composante inclut un filtre transversal (31).

9. Circuit de traitement de signal vidéo pour séparer du bruit et des signaux de composante de luminance (Y) d'un signal vidéo, ledit circuit de traitement de signal vidéo comprenant :
un premier moyen de séparation de signal de composante (51) pour séparer le signal de bruit et les signaux de composante de luminance du signal vidéo en utilisant une corrélation horizontale du signal vidéo ;
un second moyen de séparation de signal de composante (52) pour séparer le signal de bruit et les signaux de composante de luminance du signal vidéo en utilisant une corrélation verticale du signal vidéo;
un troisième moyen de séparation de signal de composante (53) pour séparer le signal de bruit et les signaux de composante de luminance du signal vidéo en utilisant une corrélation d'image du signal vidéo ;
caractérisé par :
un moyen de sélection intermédiaire (54) pour sélectionner en vue d'une émission en sortie le signal de composante de luminance présentant une valeur intermédiaire parmi les trois signaux de composante de luminance qui sont chacun séparés en utilisant soit une corrélation horizontale, soit une corrélation verticale, soit une corrélation d'image du signal vidéo.

10. Circuit de traitement de signal vidéo suivant la revendication 9, comprenant un moyen d'élimination de signal de bruit incluant un soustracteur (55) agencé pour se voir appliquer la sortie du moyen de sélection de valeur intermédiaire (54) et un signal vidéo d'entrée contenant une composante de bruit en plus du signal de luminance, le soustracteur (55) fonctionnant pour appliquer la différence des deux signaux d'entrée en tant qu'entrées sur la pluralité de moyens de séparation de signal de composante (51, 52, 53).

11. Circuit de traitement de signal vidéo suivant la revendication 9, comprenant un moyen d'élimination de signal de bruit incluant un premier soustracteur (57) et un second soustracteur (56), dans lequel le premier soustracteur (57) est agencé pour se voir appliquer la sortie du moyen de sélection de valeur intermédiaire (54), le second soustracteur (56) est agencé pour se voir appliquer une sortie du premier soustracteur (57) et un signal vidéo d'entrée contenant une composante de bruit en plus du signal de luminance et le second soustracteur (56) est connecté pour appliquer sa sortie en tant qu'entrées à la pluralité de moyens de séparation de signal de composante (51, 52, 53) et en tant qu'entrée au premier soustracteur (57) d'où il résulte qu'une sortie sensiblement exempte de bruit est produite par le moyen de sélection de valeur intermédiaire (54).

12. Circuit de traitement de signal vidéo pour séparer des signaux de composante de bruit et de chrominance (C) d'un signal vidéo, ledit circuit de traitement de signal vidéo comprenant :
un premier moyen de séparation de signal de composante (51) pour séparer les signaux de bruit et les signaux de composante de chrominance du signal vidéo en utilisant une corrélation horizontale du signal vidéo ;
un second moyen de séparation de signal de composante (52) pour séparer le signal de bruit et les signaux de composante de chrominance du signal vidéo en utilisant une corrélation verticale du signal vidéo ;
un troisième moyen de séparation de signal de composante (53) pour séparer le signal de bruit et les signaux de composante de chrominance du signal vidéo en utilisant une corrélation d'image du signal vidéo ;
caractérisé par :
un moyen de sélection de valeur intermédiaire (54) pour sélectionner en vue d'une émission en sortie le signal de composante de chrominance présentant une valeur intermédiaire parmi les trois signaux de composante de luminance qui sont chacun séparés en utilisant soit une corrélation horizontale, soit une corrélation verticale, soit une corrélation d'image du signal vidéo.
